# FASCICULE DE BREVET EUROPEEN

(11) **EP 2 404 537 B1**
(45) Date de publication et mention de la délivrance du brevet: **07.05.2014**
(21) Numéro de dépôt: 11305854.9
(22) Date de dépôt: 01.07.2011
(51) Int. Cl.: A47J 45/06

(54) **Article culinaire avec organe de préhension rabattable**
Küchengerät mit klappbarem Griff
Culinary article with folding gripping element

(30) Priorité: 06.07.2010 FR 1055466
(43) Date de publication de la demande: 11.01.2012
(73) Titulaire: SEB S.A., 69130 Ecully (FR)
(72) Inventeur: Magnouloux, Guy, 74370 Pringy (FR)
(74) Mandataire: Bourrières, Patrice

(56) Documents cités:
- WO-A1-99/05948
- DE-U1- 9 105 175
- US-B1- 6 220 477

## Description

La présente invention concerne un article culinaire notamment une casserole ou un faitout comportant des poignées rabattables.

On connaît du document EP0999777 un article culinaire comportant une calotte et deux poignées pivotantes agencées sur la calotte entre une position de travail dans laquelle les poignées s'étendent radialement à la calotte et une position de rangement dans laquelle les poignées sont repliées à proximité de la calotte.

Cependant, un tel article culinaire avec les poignées dans la position de rangement ne peut être que superposé sur un autre article culinaire de même type et de taille légèrement plus grande. La calotte de cet article culinaire ne peut en aucun cas être complètement intégrée dans la calotte de l'article culinaire de taille légèrement plus grande pour former un empilage stable compris dans un volume minimum.

On connaît également du document EP1541074 un article culinaire comportant une calotte et deux poignées pivotantes agencées sur la calotte entre une position relevée de travail dans laquelle les poignées s'étendent radialement à la calotte et une position de rangement dans laquelle les poignées sont abaissées, le long de la calotte. L'article culinaire avec les poignées en position rangement peut être inséré ou retiré d'un article culinaire de même type et de taille légèrement plus grande. Ainsi, on peut faciliter le rangement de plusieurs articles culinaires en les empilant les uns dans les autres.

Cependant, dans ce type d'empilage l'espace entre deux calottes est réduit et ne permet pas le passage des doigts de la main de l'utilisateur pour tenir ou saisir un article culinaire disposé dans un autre. Lors de l'insertion d'un article culinaire dans un autre article culinaire, aucune zone de préhension ne permet à l'utilisateur de tenir l'article culinaire jusqu'à sa position de rangement finale dans l'autre article culinaire. Lors du retrait d'un article culinaire rangé dans un autre article culinaire, l'utilisateur ne sait comment le saisir et doit imaginer lui-même des solutions, par exemple retourner l'ensemble des articles culinaires pour en faire glisser l'un par rapport à l'autre. Ainsi lors de ces manipulations, des chocs et des frottements entre les articles culinaires vont entrainer des dégradations sur ces articles culinaires.

Le but de la présente invention est de remédier aux inconvénients précités et de proposer un article culinaire présentant une ergonomie optimisée pour permettre à l'utilisateur de le manipuler en toute sécurité et de le ranger facilement dans un article culinaire de même type et de taille légèrement plus grande.

Un autre but de l'invention est de proposer un article culinaire dont la calotte peut être complètement intégrée dans la calotte d'un article culinaire de taille légèrement plus grande pour former un empilage stable compris dans un volume minimum.

Un autre but de l'invention est de proposer un article culinaire qui soit de conceptionsimple et économique à mettre en oeuvre.

Ces buts sont atteints avec un article culinaire comprenant une calotte munie d'une paroi de fond et d'une paroi latérale, au moins un organe de préhension agencé sur la paroi latérale et formé par une première partie et une deuxième partie, chaque partie étant articulée sur la calotte pour pivoter entre une position de rangement et une position de travail dans laquelle les deux parties forment un ensemble unitaire s'étendant radialement à la paroi latérale, caractérisé en ce que, dans la position de rangement, chaque partie est sensiblement alignée avec la paroi latérale et en ce que la deuxième partie comporte une zone de préhension dépassant au-dessus de la calotte pour permettre à un utilisateur de tenir l'article culinaire lors de l'insertion ou du retrait dudit article culinaire dans un article culinaire de même type et de taille légèrement plus grande.

La zone de préhension dépassant au-dessus de la calotte dans la position de rangement permet à un utilisateur de saisir facilement l'article culinaire soit pour le ranger dans un autre article culinaire dans un mouvement de translation de haut vers le bas jusqu'à son insertion complète, soit pour l'extraire de sa position empilée dans un autre article culinaire dans un mouvement inverse. Ainsi les chocs et les frottements entre les articles culinaires peuvent être évités.

Avantageusement, la première partie et la deuxième partie sont articulées autour d'un axe de rotation parallèle à la paroi de fond.

Cette disposition permet d'obtenir un organe de préhension dont l'encombrement est réduit dans une direction qui s'étend radialement à la paroi latérale en position de rangement. En effet, l'organe de préhension est divisé en deux parties, la première partie étant disposée vers le bas le long de la paroi latérale et la deuxième partie étant disposée verticalement vers le haut.

De préférence, la première partie et la deuxième partie sont verrouillées l'une sur l'autre en position de travail pour former un ensemble unitaire.

Cette disposition permet à l'utilisateur de manipuler l'article culinaire en toute sécurité. En effet, les deux parties verrouillées en position travail forment l'équivalent d'un organe de préhension monobloc. Le verrouillage des deux parties peut se renforcer lors de la manipulation sous l'effet du poids de l'article culinaire.

Avantageusement, la première partie et la deuxième partie sont liées dans leur mouvement de rotation respectif.

Cette disposition permet à l'utilisateur de manoeuvrer les deux parties de l'organe de préhension d'une seule main pour atteindre la position de travail ou la position de rangement. Un article culinaire comportant souvent deux organes de préhension disposés de manière diamétralement opposée sur la paroi verticale de la calotte, l'utilisateur peut donc facilement manoeuvrer en même temps d'une main chaque organe de préhension.

De préférence, la première partie et la deuxième partie comportent respectivement un secteur denté formant un engrenage.

Cette disposition permet de réaliser de manière particulièrement économique une liaison du mouvement de rotation respectivement de la première partie et de la deuxième partie.

Avantageusement, l'organe de préhension comporte un moyen de rappel de la première partie et de la deuxième partie en position de travail.

Cette disposition permet de passer de la position de rangement à la position de travail de manière automatique et de favoriser le verrouillage des deux parties dans la position de travail.

Cette disposition permet également de favoriser la position de travail qui est celle normalement utilisée pour la préparation des aliments et ainsi éviter de bruler l'extrémité de la première partie qui serait restée en position de rangement dirigée vers le bas trop près de la source de chauffe.

De préférence, le moyen de rappel de la première partie et de la deuxième partie en position de travail comprend au moins un ressort.

Cette disposition permet de réaliser de manière particulièrement économique le moyen de rappel.

Avantageusement, l'article culinaire comporte un couvercle destiné à reposer en bordure de la paroi latérale et comprenant un point haut, la zone de préhension dépassant au-dessus de la calotte s'étendant au maximum de deux centimètres au-dessus du point haut du couvercle lorsque ce dernier est disposé sur l'article culinaire.

Par point haut appartenant au couvercle, on comprend le point le plus haut par rapport au plan de travail sur lequel repose l'article culinaire.

De préférence, la zone de préhension dépassant au-dessus de la calotte ne s'étend pas au-dessus du point haut.

Ainsi, le point haut et l'extrémité de la zone de préhension sont compris dans un plan parallèle à la paroi de fond qui délimite la hauteur de l'article culinaire. Lors de l'empilage de l'article culinaire et son couvercle dans un article culinaire de taille légèrement plus grande, ce plan peut correspondre au plan formé par la face interne du couvercle de l'article culinaire de taille légèrement plus grande.

Avantageusement, l'article culinaire est une casserole ou un faitout.

L'invention sera mieux comprise à l'étude du mode de réalisation pris à titre nullement limitatif et illustré dans les figures annexées dans lesquelles :
- La figure 1 illustre une vue en coupe d'un article culinaire inséré dans autre article culinaire selon un mode particulier de réalisation de l'invention.
- La figure 2 illustre une vue en coupe de l'organe de préhension de l'article culinaire de la figure 1 en position de rangement.
- La figure 3 illustre une vue en coupe de l'organe de préhension de l'article culinaire de la figure 1 en position de travail.
- La figure 4 illustre une vue en perspective éclatée de l'organe de préhension de l'article culinaire de la figure 1 en position de rangement.

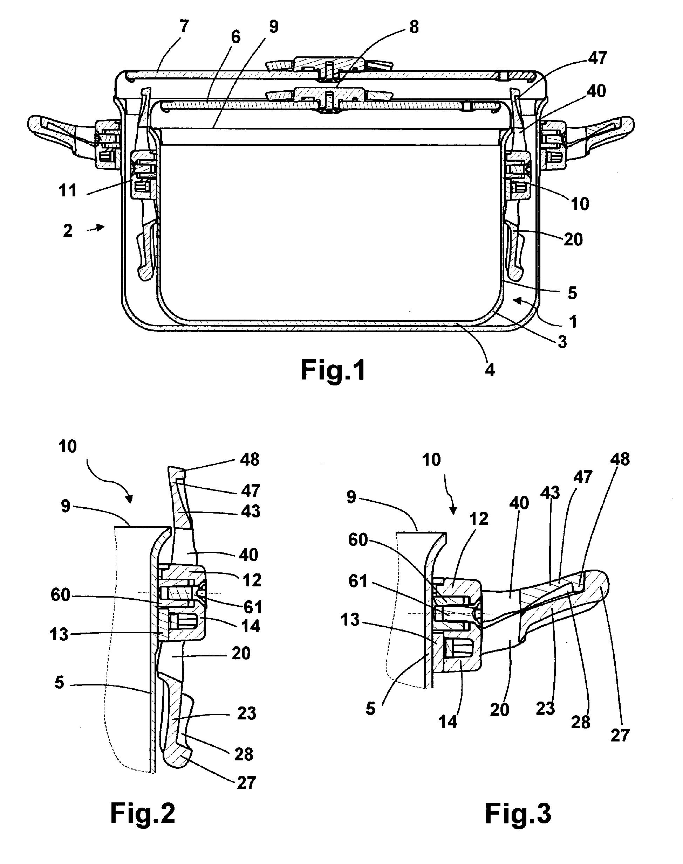

Tel que visible à la figure 1, un article culinaire 1 comporte une calotte 3 de forme sensiblement cylindrique comprenant une paroi de fond 4, une paroi latérale 5 sensiblement verticale et une extrémité supérieure délimitant une ouverture 9 par laquelle peuvent être introduits les aliments. Deux organes de préhensions 10, 11 sont agencéssur la paroi latérale 5 de manière diamétralement opposée. L'article culinaire 1 peut comporter un couvercle 6 muni de deux anses rabattables du type décrit dans le document EP1871206 et destiné à reposer en bordure de l'extrémité supérieure de la paroi latérale pour fermer l'ouverture 9. L'article culinaire 1 est inséré dans un article culinaire 2 de même type et de taille légèrement plus grande qui peut comporter également un couvercle 7.

Tel que visible aux figures 2, 3 et 4, l'organe de préhension 10 comporte une embase 12 fixée à la paroi latérale 5, une première partie 20 et une deuxième partie 40 montées pivotantes dans l'embase 12. La première partie 20 et la deuxième partie 40 ont une forme générale en U. Ainsi chaque partie 20, 40 comprend deux branches 21, 22, 41, 42 reliées par un secteur circulaire formant une extrémité libre 23, 43. A l'extrémité de chaque branche du U est agencé un tourillon 24, 25, 44, 45 qui s'étend vers l'intérieur du U. Les tourillons 24, 25, 44, 45 disposés à l'extrémité de chaque branche du U définissent un axe de rotation 26, 46 pour respectivement la première partie 20 et la deuxième partie 40. Les deux axes de rotation 26, 46 sont superposés et parallèles à la paroi de fond 4.

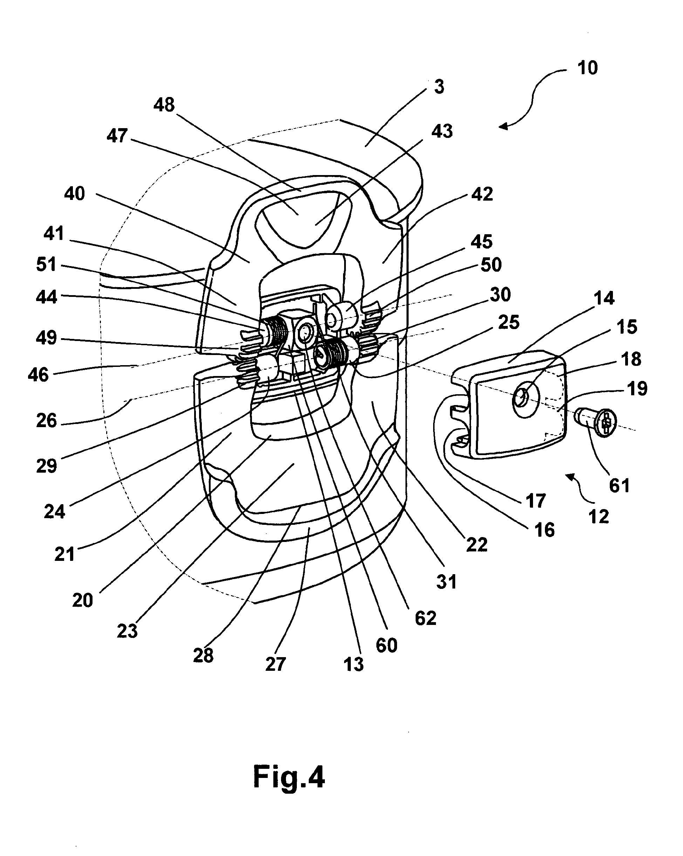

La première partie 20 et la deuxième partie 40 sont articulées dans l'embase 12 pour pivoter entre une position de rangement dans laquelle chaque partie 20, 40 est disposée verticalement, en étant sensiblement alignée avec la paroi latérale 5 (Fig. 2 et 4), et une position de travail dans laquelle les deux parties 20, 40 forment un ensemble unitaire s'étendant radialement à la paroi latérale, de manière sensiblement horizontale (Fig. 3). Ainsi, l'organe de préhension 10 est divisé en deux parties 20, 40 et présente en position de rangement un encombrement réduit dans une direction qui s'étend radialement à la paroi latérale. A titre d'exemple, des articles culinaires empilables ont des diamètres de 18, 22 et 26 centimètres soit une différence de diamètre d'environ quatre centimètres. Ainsi, dans la position de rangement l'embase 12, la première partie 20 et la deuxième partie 40 s'étendent radialement à la paroi verticale 5 au maximum de deux centimètres.

Selon l'invention, dans la position de rangement, la deuxième partie 40 alignée à la paroi verticale 5 vers le haut comporte une zone de préhension 47 dépassant au-dessus de la calotte 3. La zone de préhension 47 est dimensionnée pour être saisie facilement par la main de l'utilisateur lorsque ce dernier veut extraire l'article culinaire 1 empilé dans un autre article culinaire 2 de taille légèrement supérieure. La zone de préhension 47 est également dimensionnée pour permettre à l'utilisateur de maintenir l'article culinaire 1 jusqu'à sa position de rangement finale dans l'autre article culinaire 2 lorsqu'il veut empiler ces deux articles culinaires. La zone de préhension 47 comporte une extrémité munie d'un rebord 48 permettant aux doigts de ne pas glisser lors des manipulations en position de rangement.

Tel que visible à la figure 1, le couvercle 6 comporte un point haut 8 qui définit un plan parallèle au plan de travail. La zone de préhension 47 s'étend jusqu'à ce plan. L'article culinaire 2 de taille légèrement supérieure est dimensionné pour que la face interne du couvercle 7 soit positionnée juste au-dessus du plan contenant le point haut 8.

Dans la position de travail (Fig. 3), la deuxième partie 40 s'étend radialement à la paroi de manière sensiblement horizontale et la première partie 20 s'étend radialement à la paroi de manière sensiblement inclinée vers le haut. L'extrémité libre 23 de la première partie 20 comprend une excroissance périphérique 27 s'étendant vers le haut formant un logement 28 pour l'extrémité libre 43 de la deuxième partie 40. Ainsi dans la position de travail, l'extrémité libre 43 de la deuxième partie 40 est encastrée dans le logement 28 de l'extrémité libre 23 de la première partie 20 pour former un ensemble unitaire saisi par l'utilisateur lorsqu'il se sert de l'article culinaire.

Lorsque l'utilisateur soulève l'article culinaire 1, l'extrémité libre 43 de la deuxième partie 40 vient en appui et exerce une force contre l'excroissance périphérique 27 de la première partie 20 pour verrouiller ensemble les deux parties 20, 40. Ainsi, dans cette position de travail, la deuxième partie 40 empêche la rotation vers le haut de la première partie 20. Plus le poids de l'article culinaire 1 et des aliments qu'il contient est important, plus la force d'appui est importante et en conséquence, plus le verrouillage est important.

Tel que visible sur la figure 4, l'embase 12 comporte une platine 13 et un capot 14 comprenant quatre logements 16, 17, 18, 19. Chaque logement 16, 17, 18, 19 reçoit l'un des tourillons 24, 25, 44, 45. La paroi latérale 5 de l'article culinaire 1 comporte un goujon 60 fixé par soudage et comprenant un trou taraudé 62. Le capot 14 comporte une ouverture 15 traversante permettant le passage d'une vis 61 de fixation. L'embase 12 est fixée sur la paroi latérale 5 par le vissage de la vis 61 dans le trou taraudé.

Les extrémités de chaque branche 21, 22, 41, 42 de la première partie 20 et de la deuxième partie 40 comportent un secteur denté 29, 30, 49, 50 agencé autour de l'axe de rotation 26, 46 et qui coopèrent respectivement entre eux pour former un engrenage. La première partie 20 et deuxième partie 40 comportent chacune un ressort 31, 51 de torsion agencé sur le tourillon 25, 44, pour permettre le rappel en position de travail des deux parties 20, 40.

Pour ranger l'article culinaire 1 posé sur un plan de travail dans un autre article culinaire 2 de taille légèrement supérieure, l'utilisateur appuie avec la paume de la main sur l'extrémité libre 23 de la première partie 20 pour la faire pivoter et entrainer la deuxième partie 40 en rotation à l'aide des secteurs dentés 29, 30, 49, 50. L'utilisateur saisit ensuite la zone de préhension 47 et amène la deuxième partie 40 en position verticale ; ce qui entraine la première partie 20 également en position verticale, alignée avec la paroi latérale 5. Dans cette position de rangement, la zone de préhension 47 est située au-dessus de la calotte 3 et permet à l'utilisateur de tenir l'article culinaire 1 pour l'insérer complètement sans le lâcher dans l'autre article culinaire 2 de taille légèrement supérieure.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, l'organe de préhension comportera une butée mobile entre une position de maintien de la première partie et de la deuxième partie en position de rangement et une position de libération de la première partie et de la deuxième partie. Ainsi on obtient une position de rangement de l'organe de préhension stable lorsque la butée mobile est en position de maintien. Lorsque la butée mobile est en position de libération, la première partie et la deuxième partie pivotent en position de travail sous l'action du ressort de rappel.

## Revendications

1. Article culinaire (1) comprenant une calotte (3) munie d'une paroi de fond (4) et d'une paroi latérale (5), au moins un organe de préhension (10, 11) agencé sur la paroi latérale (5) et formé par une première partie (20) et une deuxième partie (40), chaque partie (20, 40) étant articulée sur la calotte (3) pour pivoter entre une position de rangement et une position de travail dans laquelle les deux parties (20, 40) forment un ensemble unitaire s'étendant radialement à la paroi latérale (5), **caractérisé en ce que**, dans la position de rangement, chaque partie (20, 40) est sensiblement alignée avec la paroi latérale (5) et **en ce que** la deuxième partie (40) comporte une zone de préhension (47) dépassant au-dessus de la calotte (3) pour permettre à un utilisateur de tenir l'article culinaire (1) lors de l'insertion ou du retrait dudit article culinaire dans un article culinaire (2) de même type et de taille légèrement plus grande.

2. Article culinaire (1) selon la revendication 1, **caractérisé en ce que** la première partie (20) et la deuxième partie (40) sont articulées autour d'un axe de rotation (26, 46) parallèle à la paroi de fond (4).

3. Article culinaire (1) selon l'une des revendications 1 à 2, **caractérisé en ce que** la première partie (20) et la deuxième partie (40) sont verrouillées l'une sur l'autre en position de travail pour former un ensemble unitaire.

4. Article culinaire (1) selon l'une des revendications 1 à 3, **caractérisé en ce que** la première partie (20) et la deuxième partie (40) sont liées dans leur mouvement de rotation respectif.

5. Article culinaire (1) selon la revendication 4, **caractérisé en ce que** la première partie (20) et la deuxième partie (40) comportent respectivement un secteur denté (29, 30, 49, 50) formant un engrenage.

6. Article culinaire (1) selon l'une des revendications 1 à 5, **caractérisé en ce que** l'organe de préhension (10) comporte un moyen de rappel de la première partie (20) et de la deuxième partie (40) en position de travail.

7. Article culinaire (1) selon la revendication 6, **caractérisé en ce que** le moyen de rappel de la première partie (20) et de la deuxième partie (40) en position de travail comprend au moins un ressort (31, 51).

8. Article culinaire (1) selon l'une des revendications 1 à 7, **caractérisé en ce qu'**il comporte un couvercle (6) destiné à reposer en bordure de la paroi latérale et comprenant un point haut (8), la zone de préhension (47) dépassant au-dessus de la calotte (3) s'étendant au maximum de deux centimètres au-dessus du point haut (8) du couvercle (6) lorsque ce dernier est disposé sur l'article culinaire (1).

9. Article culinaire (1) selon l'une des revendications 1 à 7, **caractérisé en ce qu'**il comporte un couvercle (6) destiné à reposer en bordure de la paroi latérale et comprenant un point haut (8), la zone de préhension (47) dépassant au-dessus de la calotte (3) ne s'étend pas au-dessus du point haut (8).

10. Article culinaire (1) selon l'une des revendications 1 à 9, **caractérisé en ce qu'**il est une casserole ou un faitout.

## Patentansprüche

1. Kochgeschirr (1), bestehend aus einem zylindrischen Behälter (3) mit einer Bodenwandung (4) und einer Seitenwandung (5), mindestens einem Greifglied (10, 11) an der Seitenwandung (5), das aus einem ersten Teil (20) und einem zweiten Teil (40) besteht, wobei jeder Teil (20, 40) an dem zylindrischen Behälter (3) angelenkt ist, damit er zwischen einer Verstauposition und einer Arbeitsposition verschwenkt werden kann, in der die beiden Teile (20, 40) eine Einheit bilden, die sich radial zur Seitenwandung (5) erstreckt, **dadurch gekennzeichnet, dass** in der Verstauposition jeder Teil (20, 40) im Wesentlichen gemäß der Seitenwandung (5) ausgerichtet ist und dass der zweite Teil (40) eine Greifzone (47) aufweist, die nach oben über den zylindrischen Behälter (3) hinausreicht, damit ein Nutzer das Kochgeschirr (1) halten kann, wenn er dieses Kochgeschirr in ein gleich geartetes und etwas größeres Kochgeschirr (2) einsetzt oder es aus diesem etwas größeren Kochgeschirr herausnimmt.

2. Kochgeschirr (1) nach Anspruch 1, **dadurch gekennzeichnet, dass** der erste Teil (20) und der zweite Teil (40) um eine Rotationsachse (26, 46) verschwenkbar sind, die parallel zur Bodenwandung (4) steht.

3. Kochgeschirr (1) nach einem der Ansprüche 1 bis 2, **dadurch gekennzeichnet, dass** der erste Teil (20) und der zweite Teil (40) in der Arbeitsposition gegeneinander verriegelt sind, sodass sie eine Einheit bilden.

4. Kochgeschirr (1) nach einem der Ansprüche 1 bis 3, **dadurch gekennzeichnet, dass** der erste Teil (20) und der zweite Teil (40) in ihrer jeweiligen Drehbewegung verbunden sind.

5. Kochgeschirr (1) nach Anspruch 4, **dadurch gekennzeichnet, dass** der erste Teil (20) und der zweite Teil (40) jeweils mit einem gezahnten Bereich (29, 30, 49, 50) versehen sind, der eine Zahnverbindung bildet.

6. Kochgeschirr (1) nach einem der Ansprüche 1 bis 5, **dadurch gekennzeichnet, dass** das Greifglied (10) mit einer Rückstellvorrichtung ausgestattet ist, die den ersten Teil (20) und den zweiten Teil (40) in die Arbeitsposition zurückversetzt.

7. Kochgeschirr (1) nach Anspruch 6, **dadurch gekennzeichnet, dass** die Rückstellvorrichtung, die den ersten Teil (20) und den zweiten Teil (40) in die Arbeitsposition zurückversetzt, mit mindestens einer Feder (31, 51) ausgestattet ist.

8. Kochgeschirr (1) nach einem der Ansprüche 1 bis 7, **dadurch gekennzeichnet, dass** es einen Deckel (6) umfasst, der auf dem Rand der Seitenwandung aufliegen soll und mit einem hohen Punkt (8) versehen ist, wobei die Greifzone (47) nach oben über den zylindrischen Behälter (3) hinausragt, der den hohen Punkt (8) des Deckels (6) um höchstens zwei Zentimeter überragt, wenn der Deckel auf dem Kochgeschirr (1) aufliegt.

9. Kochgeschirr (1) nach einem der Ansprüche 1 bis 7, **dadurch gekennzeichnet, dass** es einen Deckel (6) umfasst, der auf dem Rand der Seitenwandung aufliegen soll und mit einem hohen Punkt (8) versehen ist, wobei die Greifzone (47), die nach oben über den zylindrischen Behälter (3) hinausragt, den hohen Punkt (8) nicht überragt.

10. Kochgeschirr (1) nach einem der Ansprüche 1 bis 9, **dadurch gekennzeichnet, dass** es sich um eine Kasserolle oder einen Topf handelt.

## Claims

1. Culinary article (1) comprising a cap (3) provided with a bottom wall (4) and a side wall (5), at least one gripping member (10, 11) arranged on the side wall (5) and formed by a first part (20) and a second part (40), each part (20, 40) being articulated on the cap (3) to pivot between a storage position and a working position wherein the two parts (20, 40) form a single unit extending radially to the side wall (5), **characterised in that**, in the storage position, each part (20, 40) is substantially aligned with the side wall (5) and **in that** the second part (40) comprises a gripping area (47) protruding above the cap (3) to allow a user to hold the culinary article (1) when inserting or removing said culinary article in a culinary article (2) of the same type and slightly larger size.

2. Culinary article (1) according to claim 1, **characterised in that** the first part (20) and the second part (40) are articulated about an axis of rotation (26, 46) parallel to the bottom wall (4).

3. Culinary article (1) according to claim 1 or 2, **characterised in that** the first part (20) and the second part (40) are locked to each other in working position to form a single unit.

4. Culinary article (1) according to one of claims 1 to 3, **characterised in that** the first part (20) and the second part (40) are connected in their respective rotation movements.

5. Culinary article (1) according to claim 4, **characterised in that** the first part (20) and the second part (40) comprise respectively a toothed sector (29, 30, 49, 50) forming a gear.

6. Culinary article (1) according to one of claims 1 to 5, **characterised in that** the gripping member (10) comprises means for returning the first part (20) and the second part (40) to working position.

7. Culinary article (1) according to claim 6, **characterised in that** the means for returning the first part (20) and the second part (40) to working position comprises at least one spring (31,51).

8. Culinary article (1) according to one of claims 1 to 7, **characterised in that** it comprises a lid (6) intended to rest on the edge of the side wall and comprising a high point (8), the gripping area (47) protruding above the cap (3) extending a maximum of two centimetres above the high point (8) of the lid (6) when the latter is placed on the culinary article (1).

9. Culinary article (1) according to one of claims 1 to 7, **characterised in that** it comprises a lid (6) intended to rest on the edge of the side wall and comprising a high point (8), the gripping area (47) protruding above the cap (3) does not extend above the high point (8).

10. Culinary article (1) according to one of claims 1 to 9, **characterised in that** it is a pan or a stewpot.
